# EUROPÄISCHE PATENTSCHRIFT

(11) **EP 3 608 151 B1**
(45) Veröffentlichungstag und Bekanntmachung des Hinweises auf die Patenterteilung: **16.04.2025**
(21) Anmeldenummer: 19184295.4
(22) Anmeldetag: 04.07.2019
(51) Int. Cl.: B60L 1/00, B62D 55/00

(54) **PISTENRAUPE MIT EINEM KETTENLAUFWERK**
PISTE CATERPILLAR WITH A CHAIN DRIVE
ENGIN DE DAMAGE DE PISTES DOTÉ D'UN TRAIN DE ROULEMENT À CHENILLE

(30) Priorität: 07.08.2018 DE 102018213240
(43) Veröffentlichungstag der Anmeldung: 12.02.2020
(60) Teilanmeldung: 24207386.4
(73) Patentinhaber: Kässbohrer Geländefahrzeug AG, 88471 Laupheim (DE)
(72) Erfinder: Betz, Peter, 88471 Baustetten (DE); Kuhn, Michael, 88480 Achstetten (DE); Luigart, Christof, 89155 Erbach (DE); Mayer, Andreas, 89597 Munderkingen (DE)
(74) Vertreter: Patentanwälte Ruff, Wilhelm, Beier, Dauster & Partner mbB

(56) Entgegenhaltungen:
- EP-A2- 1 245 736
- DE-A1- 10 333 594
- DE-A1- 102009 047 065
- DE-A1- 102010 043 511
- DE-A1- 102011 087 711
- DE-U1- 202013 004 087
- DE-U1- 29 607 651

## Beschreibung

Die Erfindung betrifft eine Pistenraupe mit einem Kettenlaufwerk, das mittels eines Fahrantriebsystems antreibbar ist, wobei das Fahrantriebsystem zwei Elektromotoren aufweist, die jeweils einem Turasrad einer Laufwerksseite des Kettenlaufwerks zugeordnet sind.

Aus der DE 296 07 651 U1 ist eine Pistenraupe bekannt, bei dem die Turasräder eines Kettenlaufwerks der Pistenraupe durch Elektromotoren angetrieben werden. Zum Antrieb der Elektromotoren für die Turasräder ist ein zentraler Verbrennungsmotor vorgesehen, der mit einem Generator gekoppelt ist, der jeweils mit dem Elektromotor für das Turasrad verbunden ist. Eine Winde und eine Heckfräse werden über elektrische Antriebe versorgt. Für Linearstellmechanismen von Geräteträgern an Front und Heck oder für andere Zusatzgeräte wie Frontfrässchleuder oder Räumschild sind elektrohydraulische Antriebe vorgesehen.

Aus der EP 1 245 736 A2 ist ein hydrostatischer Rotationsantrieb für eine Heckfräse einer Pistenraupe bekannt, der über eine Regelpumpe durch einen Dieselmotor angetrieben wird.

Eine weitere Pistenraupe ist aus der US 5,363,937 A bekannt. Die Pistenraupe weist ein Kettenlaufwerk mit zwei Fahrketten auf, die an gegenüberliegenden Längsseiten der Pistenraupe vorgesehen sind, und die durch jeweils ein Triebrad angetrieben sind. Das jeweilige Triebrad wird mittels jeweils eines Elektromotors angetrieben. Die Pistenraupe weist zudem eine Heckfräse auf, die heckseitig an der Pistenraupe angebracht ist. Die Heckfräse weist zwei Fräswellen auf, die über jeweils einen Elektromotor angetrieben sind.

Aus der DE 20 2013 004 087 U1 ist eine weitere, mit einem emissionsfreien Fahrantriebsystem versehene Pistenraupe bekannt. Zwei Laufwerksseiten eines Kettenlaufwerks der Pistenraupe werden über jeweils ein Triebrad mittels jeweils eines Elektromotors angetrieben. Auch eine rotierbare Fräswelle einer Heckfräse wird mittels eines Elektromotors angetrieben. Zudem weist die Pistenraupe zusätzliche hydraulische Stellmittel zum Verstellen eines frontseitigen Räumschilds und zum Verstellen eines Heckgeräteträgers und der Heckfräse auf, die über eine Hydraulikpumpe gespeist werden. Die Hydraulikpumpe wird durch einen Elektromotor angetrieben, um den benötigten Hydraulikdruck innerhalb des Hydrauliksystems aufzubauen.

Aufgabe der Erfindung ist es, eine Pistenraupe der eingangs genannten Art zu schaffen, die ohne großen sicherheitstechnischen Aufwand einen emissionsfreien Betrieb ermöglicht.

Diese Aufgabe wird durch die Merkmale des Anspruchs 1 gelöst. Da - wie bei herkömmlichen Pistenraupen - ein Arbeitshydrauliksystem mit wenigstens einem hydrostatischen Rotationsantrieb vorgesehen ist, müssen für entsprechende Arbeitsfunktionen keine sicherheitstechnischen Maßnahmen ergriffen werden, die bei rein elektrischen Antrieben notwendig wären. Zu den Arbeitsfunktionen zählt neben einem Heckfräsenbetrieb insbesondere ein Windenbetrieb einer Seilwinde der Pistenraupe, durch die die Pistenraupe eine Pistenpflege auch in steilem Gelände betreiben kann. Die entsprechenden Arbeitsfunktionen werden durch hydrostatische Rotationsantriebe erzielt, wobei insbesondere eine Funktion der Heckfräse auch durch zwei hydrostatische Rotationsantriebe erzielt werden kann, sofern die Heckfräse zwei in Fahrzeugquerrichtung nebeneinander angeordnete, antreibbare Fräswellen aufweist. Als Energiequelle kann vorzugsweise eine Brennstoffzelle oder ein Batteriesystem vorgesehen sein.

In Ausgestaltung der Erfindung ist zur Energieversorgung des wenigstens einen Elektromotors ein wiederaufladbares Batteriesystem vorgesehen. Das Batteriesystem weist wenigstens einen Akkumulator, vorzugsweise ein oder mehrere Akkumulatorpakete aus jeweils einer Vielzahl von Akkumulatoren auf. Die Akkumulatoren können durch Lithium-Ionen-Akkumulatoren gebildet sein.

In weiterer Ausgestaltung der Erfindung sind der wenigstens eine Elektromotor für das Arbeitshydrauliksystem und/oder die Elektromotoren für das Fahrantriebsystem als Synchronmotor gestaltet und werden im Betrieb mit einer Batteriespannung von 400 V oder 100 V versorgt. Die vergleichsweise geringe Spannung von 100 V ermöglicht es, auf sicherheitstechnischen Aufwand, der im Falle von Hochspannungselektrik (400 V) notwendig ist, zu verzichten. Dies gewährleistet einen vergleichsweise einfachen Aufbau von Fahr- und Arbeitsfunktionen der Pistenraupe bei dennoch emissionsfreiem Betrieb. Bei Einsatz einer Batteriespannung von etwa 400 V wird entsprechende Hochspannungselektrik und -elektronik benötigt.

In weiterer Ausgestaltung der Erfindung ist fahrzeugseitig ein Ladegerät, insbesondere mit einem Ladestecker, vorgesehen. Die fahrzeugseitige Anordnung des Ladegeräts und des fakultativen Ladesteckers ermöglicht den einfachen Anschluss der Pistenraupe an ein stationäres Stromnetz. Der Spannungswandler ermöglicht den Anschluss eines 100 V-Synchronmotors an ein 220 V-Stromnetz oder ein 380 V-Stromnetz oder ein ähnliches Hochspannungsnetz und gewährleistet hierdurch eine Schnellladungsmöglichkeit. Besonders vorteilhaft ist das Ladegerät im Bereich einer Rückwand eines Fahrerhauses angebracht. Dies ermöglicht einen besonders einfachen Zugang des Ladegeräts durch eine Bedienperson. Der fakultative vorhandene, ebenfalls an Bord der Pistenraupe befindliche Ladestecker mit Ladekabel ermöglicht eine einfach Steckverbindung mit einer stationären, gebäude- oder ladestationsseitigen Steckdose. Bei einer Betriebsspannung von 100 V ist das Ladegerät zusätzlich mit einem Spannungswandler versehen.

In weiterer Ausgestaltung der Erfindung ist das Batteriesystem in einem Fahrwerksrahmen unterhalb des Fahrerhauses austauschbar untergebracht. Die Anordnung des Batteriesystems gemäß dieser Ausgestaltung gewährleistet zum einen einen tiefen Schwerpunkt für die Pistenraupe. Zum anderen wird eine einfache Zugänglichkeit des Batteriesystems für einen Austausch gegen ein anderes Batteriesystem ermöglicht. Vorteilhaft ist das Fahrerhaus zwischen einer Betriebsstellung und einer Servicestellung kippbeweglich angeordnet. In der gekippten Stellung des Fahrerhauses ist ein Zugang zu dem Batteriesystem gewährleistet.

In weiterer Ausgestaltung der Erfindung weist das Batteriesystem mehrere Batteriepakete auf, die jeweils mittels einer elektrischen Steckverbindung schnellwechselbar miteinander sowie mit dem wenigstens einen Elektromotor verbunden sind. Entsprechende Batteriepakete, die auch als Battery Packs bezeichnet werden, können durch diese Ausgestaltung sehr schnell von einer Fahrzeugelektrik der Pistenraupe entkoppelt und aus dem Fahrzeug entnommen werden. In gleicher Weise können neue Batteriepakete schnell ins Fahrzeug eingesetzt und manuell durch Koppeln der elektrischen Steckverbindung mit der Fahrzeugelektrik verbunden werden. Hierdurch ergibt sich ein Schnellwechselvorgang für das Batteriesystem.

In weiterer Ausgestaltung der Erfindung ist den Batteriepaketen eine elektrische Schaltung zugeordnet, die die Batteriepakete elektrisch miteinander sowie mit weiteren elektrischen oder elektronischen Bauteilkomponenten der Fahrzeugelektrik und insbesondere der Elektromotoren koppelt. Die elektrische Schaltung verbindet die Batteriepakete, insbesondere in Reihe- oder in Parallelschaltung, elektrisch miteinander, um die Batteriepakete als einheitliches Batteriesystem für den Betrieb der Elektromotoren einzusetzen.

Weitere Vorteile und Merkmale der Erfindung ergeben sich aus den Ansprüchen. Nachfolgend ist ein bevorzugtes Ausführungsbeispiel der Erfindung beschrieben und anhand der Zeichnungen dargestellt.
- Fig. 1: zeigt eine Ausführungsform einer erfindungsgemäßen Pistenraupe in einer teilweise aufgeschnittenen, schematischen Seitenansicht,
- Fig. 2: ein Blockschema der Fahr- und Arbeitsfunktionen der Pistenraupe gemäß Fig. 1 und
- Fig. 3: ein Blockschema einer weiteren Ausführungsform einer erfindungsgemäßen Pistenraupe ähnlich den Fig. 1 und 2.

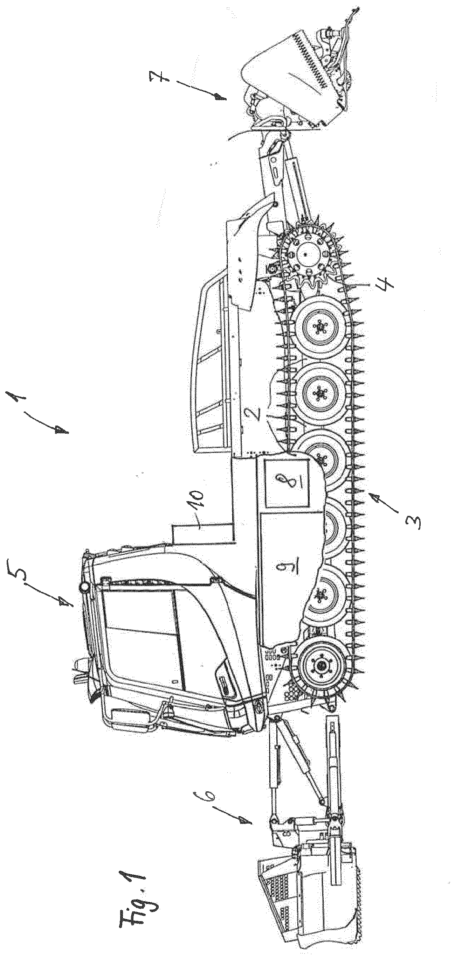

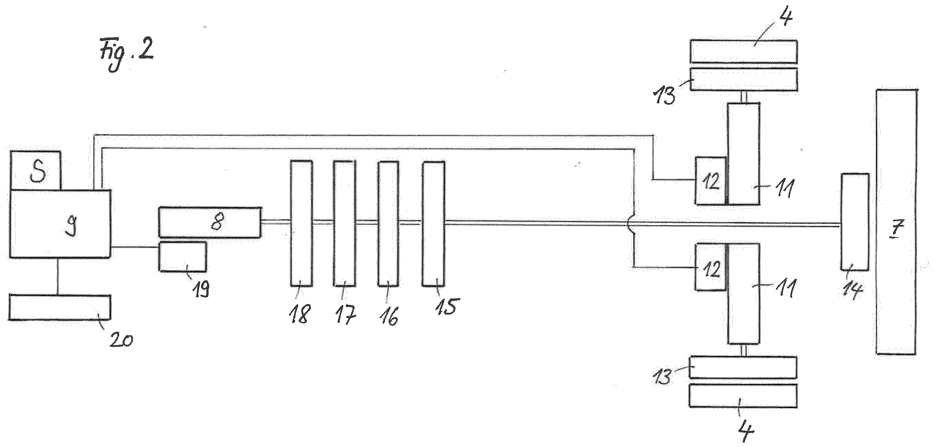

Eine Pistenraupe 1 nach den Fig. 1 und 2 weist einen Fahrwerksrahmen 2 auf, an dessen gegenüberliegenden Längsseiten zwei Laufwerksseiten eines Kettenlaufwerks 3 angeordnet sind. Jede Laufwerksseite des Kettenlaufwerks 3 weist eine umlaufende Kette, ein frontseitiges Spannrad, mehrere an das frontseitige Spannrad in Fahrzeuglängsrichtung nach hinten anschließende und in einer Reihe hintereinander angeordnete Laufräder sowie rückseitig ein auch als Turasrad 4 bezeichnetes Triebrad auf. Die Kette ist im Bereich des frontseitigen Spannrads und des rückseitigen Turasrads 4 umgelenkt und läuft mit einem Obertrum oberhalb der Laufräder und mit einem Untertrum unterhalb der Laufräder entlang.

Heckseitig ist an dem Fahrwerksrahmen 2 ein hydraulisch verstellbarer Heckgeräteträger vorgesehen, der nicht näher bezeichnet ist. Der Heckgeräteträger trägt eine Heckfräse 7. Die Heckfräse 7 ist mit wenigstens einer rotierbaren Fräswelle und einer Finisheranordnung versehen, die den durch die Fräswelle zerkleinerten und aufgeworfenen Schneeuntergrund glättet.

Frontseitig ist an einer frontseitigen Stirnseite des Fahrwerksrahmens 2 ein Räumschild 6 angelenkt. Das Räumschild 6 ist mithilfe von hydraulischen Stellmitteln verstellbar. In einer vorderen Hälfte des Fahrwerksrahmens 2 sitzt auf dem Fahrwerksrahmen 2 ein Fahrerhaus 5, in dem ein Fahrer Platz nimmt, um die Pistenraupe 1 bezüglich ihrer Fahr- und Arbeitsfunktionen zu steuern. Das Fahrerhaus 5 ist für Servicearbeiten aus der in Fig. 1 dargestellten Betriebsstellung in eine Servicestellung nach vorne verkippbar um eine in Fahrzeugquerrichtung erstreckte Kippachse, die das Fahrerhaus 5 kippbeweglich am Fahrwerksrahmen 2 anlenkt.

Die Pistenraupe 1 weist ein Arbeitshydrauliksystem auf, das einen hydrostatischen Fräsmotor 14 für die Fräswelle der Heckfräse 7 sowie verschiedene hydraulische Arbeits- und Betriebsfunktionen der Pistenraupe 1 steuert. Zusätzlich zu dem als hydrostatischer Rotationsantrieb gestalteten Fräsmotor 14 sind eine hydrostatische Bremspumpe 18, eine hydrostatische Arbeitspumpe 17 und eine hydrostatische Lüfterpumpe 16 vorgesehen, die hydraulische Arbeits- und Betriebsfunktionen der Pistenraupe 1 speisen. Dem hydrostatischen Fräsmotor 14 ist eine hydrostatische Fräspumpe 15 zugeordnet, die entsprechend den hydraulischen Druck für den hydrostatischen Fräsmotor 14 aufbringt. Die genannten hydrostatischen Pumpen 15 bis 18 werden koaxial durch eine Antriebswelle eines Elektromotors 8 angetrieben. Die Arbeitspumpe 17 dient zum Aufbau eines hydrostatischen Drucks für Linearaktuatoren zum Verstellen des Räumschilds und/oder Linearaktuatoren zur Verstellung des Heckgeräteträgers. Die Lüfterpumpe 16 dient zur Erzeugung eines hydrostatischen Drucks für den Betrieb eines hydrostatischen Rotationsantriebs für ein Lüfterrad oder Ähnliches zur Belüftung und Kühlung elektrischer Funktionseinheiten der Pistenraupe 1, die nachfolgend näher beschrieben werden.

Die Bremspumpe 18, die Arbeitspumpe 17, die Lüfterpumpe 16, die Fräspumpe 15 und der hydrostatische Fräsmotor 14 sind Teile des Arbeitshydrauliksystems der Pistenraupe 1.

Ein Fahrantriebsystem für die Pistenraupe 1 weist zwei Elektromotoren 11 auf, die als Radnabenmotoren koaxial zu jeweils einem Turasrad 4 mittels jeweils eines Planetengetriebes 13 mechanisch mit dem jeweiligen Turasrad 4 verbunden sind, um dieses anzutreiben. Die beiden Elektromotoren 11 sind Synchronmotoren, die mittels jeweils eines Frequenzumrichters 12 durch Gleichstrom eines Batteriesystems 9 gespeist werden, das durch eine Vielzahl von wiederaufladbaren Akkumulatoren gebildet ist. Das Batteriesystem 9 ist im Fahrwerksrahmen 2 unterhalb des Fahrerhauses 5 untergebracht und dort lösbar befestigt, um das Batteriesystem 9 austauschen zu können. Das Batteriesystem 9 ist unterhalb des Fahrerhauses 5 relativ zum Fahrwerksrahmen 2 derart positioniert, dass das Batteriesystem 9 in der gekippten Servicestellung des Fahrerhauses 5 von oben her zugänglich ist, um entnommen werden zu können. Dadurch kann das Batteriesystem 9 in einfacher Weise durch ein neues Batteriesystem ersetzt werden.

Das Arbeitshydrauliksystem wird durch einen Elektromotor 8 angetrieben, der die verschiedenen Pumpeinheiten rotatorisch antreibt und dadurch den gewünschten hydrostatischen Druck erzeugt. Dabei sind die verschiedenen Pumpeinheiten koaxial zu einer Antriebswelle des Elektromotors 8 angeordnet, um eine einfache Antriebsübertragung zu ermöglichen. Der Elektromotor 8 ist ebenfalls als Synchronmotor ausgebildet und wird durch das Batteriesystem 9 mit Strom versorgt. Ein Frequenzumrichter 19 dient auch bei dem Elektromotor 8 zur Umwandlung des Gleichstroms des Batteriesystems 9 in den für den Synchronmotor des Elektromotors 8 benötigten Wechselstrom.

Sowohl der Elektromotor 8 als auch die beiden Elektromotoren 11 werden mit einer Betriebsspannung von 100 V betrieben.

Den Elektromotoren 8 und 11 sowie dem Batteriesystem 9 ist eine elektronische Steuereinheit S zugeordnet, die eine Ansteuerung der Elektromotoren 8, 11 bewirkt und ein Batteriemanagementsystem umfasst, das eine gleichmäßige Auslastung der Vielzahl von Akkumulatoren innerhalb des Batteriesystems 9 gewährleistet. Ein dem Batteriesystem 9 zugeordneter Bremschopper 20 kann elektrische Energie aufnehmen, die von dem Batteriesystem 9 insbesondere bei Talfahrt der Pistenraupe 1 und einer entsprechenden Energierückspeisung nicht mehr aufgenommen werden kann.

Um ein Aufladen des Batteriesystems 9 zu ermöglichen, ist an das Batteriesystem 9 ein Ladegerät 10 permanent angeschlossen, das an einer Rückwand des Fahrerhauses 5 fahrzeugfest angeordnet ist. Das Ladegerät 10 ist mit einem Spannungswandler versehen, um eine Aufladung des eine Batteriespannung von 100 V aufweisenden Batteriesystems 9 von einem gebäudeseitigen 380 V-Stromnetz bewirken zu können.

Die Pistenraupe 1 weist demzufolge einen rein elektrischen Fahrantrieb auf, wobei die beiden Elektromotoren 11 direkt auf die Turasräder 4 beider Laufwerksseiten des Kettenlaufwerks 3 wirken. Zudem weist die Pistenraupe 1 hydrostatische Antriebe für die Heckfräse 7 einerseits und verschiedene Arbeits- und Betriebsfunktionen der Pistenraupe 1 andererseits auf, die über einen gemeinsamen Elektromotor 8 angetrieben werden.

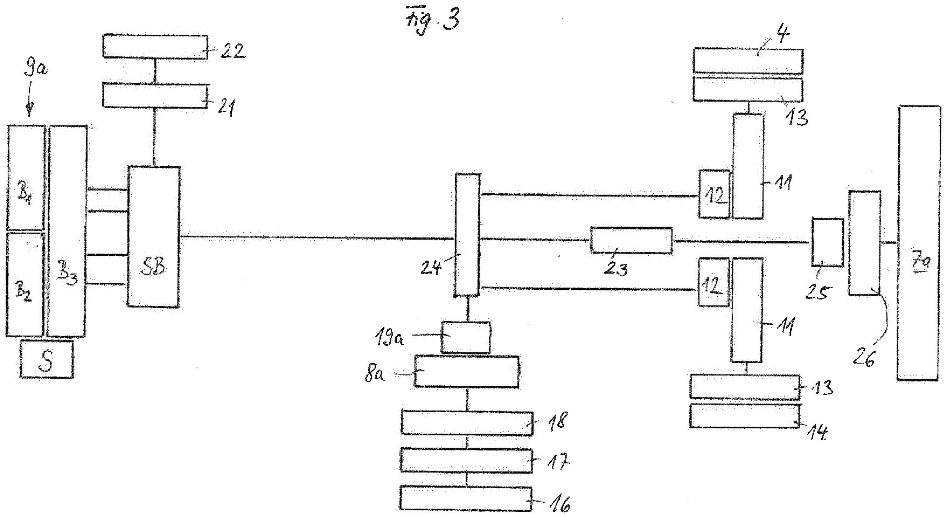

Eine Pistenraupe gemäß Fig. 3 entspricht in Aufbau und Funktion bis auf die nachfolgend aufgeführten Unterschiede der Pistenraupe, wie sie zuvor unter Zuhilfenahme der Fig. 1 und 2 beschrieben wurde. Bei dem Blockschaltbild gemäß Fig. 3 sind demzufolge funktionsgleiche Teile und Komponenten mit gleichen Bezugszeichen unter Hinzufügung des Buchstabens a versehen. Zur Vermeidung von Wiederholungen wird bezüglich bau- und funktionsgleicher Komponenten wie auch bezüglich des grundsätzlichen Aufbaus und der Funktion der Pistenraupe auf die anhand der Fig. 1 und 2 beschriebene Ausführungsform verwiesen.

Die Ausführungsform einer Pistenraupe gemäß Fig. 3 weist einige wesentliche Unterschiede auf, die nachfolgend beschrieben sind.

Die Energieversorgung der verschiedenen Elektromotoren der Pistenraupe ist im Hochvoltbereich mit einer Betriebsspannung von 380 V/400 V vorgesehen.

Das Batteriesystem 9a wird durch mehrere Batteriepakete B₁ bis B₃ gebildet. Die Batteriepakete B₁ bis B₃ sind durch eine elektrische Schaltung SB miteinander elektrisch verbunden. Die elektrische Schaltung SB ist in einem geschlossenen Gehäuse untergebracht. An die elektrische Schaltung SB ist sowohl ein Ladegerät 21 als auch ein Ladestecker 22 angeschlossen, wobei der Ladestecker 22 über ein flexibles Ladekabel mit dem Ladegerät verbunden ist. Der Ladestecker 22 kann bei Bedarf in eine Steckdose eines stationären Stromversorgungsnetzes eingesteckt werden. Dem Batteriesystem 9a ist analog der Ausführungsform nach Fig. 2 eine elektronische Steuereinheit S zugeordnet, die ein Batteriemanagementsystem umfasst. Die Batteriepakete B₁ und B₂ sind beim dargestellten Ausführungsbeispiel mit vier Batterien und das Batteriepaket B₃ mit acht Batterien versehen.

Durch den Betrieb der Elektromotoren 8a, 11, 26 im Hochvoltbereich mit 380 V/400 V umfasst die entsprechende Fahrzeugelektrik einen Hochvoltverteiler 24. An den Hochvoltverteiler 24 ist über einen Frequenzumrichter 19a zum einen der Elektromotor 8a angeschlossen, der das Arbeitshydrauliksystem betreibt. Das Arbeitshydrauliksystem umfasst eine hydrostatische Bremspumpe 18, eine hydrostatische Arbeitspumpe 17 und eine hydrostatische Lüfterpumpe 16, deren Funktionen den zuvor anhand der Fig. 1 und 2 bereits beschriebenen Funktionen entsprechen.

Ein weiterer wesentlicher Unterschied bei der Pistenraupe gemäß Fig. 3 ist es, dass ein Elektromotor 26 zum Antreiben wenigstens einer Fräswelle der Heckfräse 7a direkt an der Heckfräse 7a montiert ist, so dass auch die Energieversorgung dieses Elektromotors 26 über einen Frequenzumrichter 25 mittels des bereits beschriebenen, im Hochvoltbereich betriebenen Batteriesystems erfolgt. Der Elektromotor 26 für die Heckfräse 7a ist mittels seines Frequenzumrichters 25 über eine elektrische Leitung mit dem Hochvoltverteiler 24 verbunden. Da die Heckfräse 7a lösbar an einem heckseitigen Geräteträger der Pistenraupe angeordnet ist, ist im Bereich des Geräteträgers eine Hochvoltsteckverbindung 23 vorgesehen, um den Elektromotor 26 für die Heckfräse 7a mit der Fahrzeugelektrik zu verbinden. Die Hochvoltsteckverbindung 23 weist zwei zueinander komplementäre und zusammensteckbare Steckverbindungsteile auf, von denen ein Steckverbindungsteil über ein flexibles Kabel dem Elektromotor 26 und das andere Steckverbindungsteil mit der fahrzeugseitigen Elektrik verbunden ist. Das letztgenannte Steckverbindungsteil ist im Bereich des Geräteträgers fest angeordnet. Bei einem Entfernen der Heckfräse 7a von der Pistenraupe kann somit in einfacher Weise die Hochvoltsteckverbindung 23 getrennt werden und die Heckfräse 7a vom Geräteträger gelöst werden.

Die elektrischen Fahrantriebe 11 bis 13 für die beiden Turasräder 4 des Kettenlaufwerks unterscheiden sich nicht von der Ausführungsform gemäß den Fig. 1 und 2, so dass hierauf an dieser Stelle nicht näher eingegangen werden muss.

## Patentansprüche

1. Pistenraupe (1) mit einem Kettenlaufwerk (3), das mittels eines Fahrantriebsystems antreibbar ist, wobei das Fahrantriebsystem zwei Elektromotoren (11) aufweist, die jeweils einem Turasrad (4) einer Laufwerksseite des Kettenlaufwerks (3) zugeordnet sind, **dadurch gekennzeichnet, dass** ein Arbeitshydrauliksystem vorgesehen ist, das wenigstens einen einer Arbeitsfunktion der Pistenraupe zugeordneten hydrostatischen Rotationsantrieb aufweist, wobei das Arbeitshydrauliksystem einen als hydrostatischer Rotationsantrieb gestalteten Fräsmotor (14) für eine Fräswelle einer Heckfräse (7) und eine hydrostatische Bremspumpe (18), eine hydrostatische Arbeitspumpe (17) und eine hydrostatische Lüfterpumpe (16) aufweist, wobei dem Fräsmotor (14) eine hydrostatische Fräspumpe (15) zugeordnet ist, die einen hydraulischen Druck für den Fräsmotor (14) aufbringt, wobei die Arbeitspumpe (17) zum Aufbau eines hydrostatischen Drucks für Linearaktuatoren zum Verstellen des Räumschilds und/oder für Linearaktuatoren zur Verstellung des Heckgeräteträgers dient, wobei die Lüfterpumpe (16) zur Erzeugung eines hydrostatischen Drucks für einen Betrieb eines hydrostatischen Rotationsantriebs für ein Lüfterrad zur Belüftung und Kühlung elektrischer Funktionseinheiten der Pistenraupe (1) dient, und dass das Arbeitshydrauliksystem durch wenigstens einen Elektromotor (8, 8a) angetrieben ist, der durch eine fahrzeugseitig montierte Energiequelle versorgt ist, sowie dass die hydrostatische Fräspumpe (15), die hydrostatische Lüfterpumpe (16), die hydrostatische Arbeitspumpe (17) und die hydrostatische Bremspumpe (18) koaxial durch eine Antriebswelle des Elektromotors (8) angetrieben sind.

2. Pistenraupe nach Anspruch 1, **dadurch gekennzeichnet, dass** zur Energieversorgung des wenigstens einen Elektromotors (8, 8a, 11) ein wiederaufladbares Batteriesystem (9, 9a) vorgesehen ist.

3. Pistenraupe nach Anspruch 2, **dadurch gekennzeichnet, dass** der Elektromotor (8, 8a) für das Arbeitshydrauliksystem als Synchronmotor gestaltet und - im Betrieb - mit einer Batteriespannung von 400 V oder 100 V versorgt wird.

4. Pistenraupe nach Anspruch 1 oder 2, **dadurch gekennzeichnet, dass** die Elektromotoren (11) des Fahrantriebsystems als Synchronmotoren gestaltet und - im Betrieb - mit einer Batteriespannung von 400 V oder 100 V versorgt werden.

5. Pistenraupe nach einem der vorhergehenden Ansprüche, **dadurch gekennzeichnet, dass** fahrzeugseitig ein Ladegerät (10, 21), insbesondere mit einem Ladestecker (22), vorgesehen ist.

6. Pistenraupe nach Anspruch 5, **dadurch gekennzeichnet, dass** das Ladegerät (10) mit einem Spannungswandler versehen ist.

7. Pistenraupe nach Anspruch 5 oder 6, **dadurch gekennzeichnet, dass** das Ladegerät (10, 21) und der Ladestecker (22) im Bereich einer Rückwand eines Fahrerhauses (5) angebracht ist.

8. Pistenraupe nach Anspruch 2 oder 3, **dadurch gekennzeichnet, dass** das Batteriesystem (9, 9a) in einem Fahrwerksrahmen (2) unterhalb des Fahrerhauses (5) austauschbar untergebracht ist.

9. Pistenraupe nach Anspruch 2 oder 3, **dadurch gekennzeichnet, dass** das Batteriesystem (9a) mehrere Batteriepakete (B₁ bis B₃) aufweist, die jeweils mittels einer elektrischen Steckverbindung (23) schnellwechselbar miteinander sowie mit dem wenigstens einen Elektromotor (26) verbunden sind.

10. Pistenraupe nach Anspruch 9, **dadurch gekennzeichnet, dass** den Batteriepaketen (B₁ bis B₃) eine elektrische Schaltung (SB) zugeordnet ist, die die Batteriepakete (B₁ bis B₃) elektrisch miteinander sowie mit weiteren elektrischen oder elektronischen Bauteilkomponenten der Fahrzeugelektrik und insbesondere der Elektromotoren (8a, 11, 26) koppelt.

## Claims

1. A snow groomer (1) having a track (3) drivable by means of a drive system, wherein das drive system has two electric motors (11) associated with a sprocket wheel (4) of each side of the track (3), **characterized in that** a work hydraulics system is provided which has at least one hydrostatic rotary drive associated with a work function of the snow groomer, wherein the work hydraulics system has a tiller motor (14) designed as a hydrostatic rotary drive for a tilling shaft of a rear-mounted tiller (7) and a hydrostatic brake pump (18), a hydrostatic work pump (17) and a hydrostatic fan pump (16); wherein a hydrostatic tiller pump (15) applying a hydraulic pressure for the tiller motor (14) is associated with the tiller motor (14); wherein the work pump (17) serves to build up a hydrostatic pressure for linear actuators to adjust the clearing blade and/or for linear actuators to adjust the rear attachment carrier; and wherein the fan pump (16) serves to generate a hydrostatic pressure for operating a hydrostatic rotary drive for a fan wheel to ventilate and cool electric function units of the snow groomer (1), and **in that** the work hydraulics system is driven by at least one electric motor (8, 8a) supplied from an energy source mounted on the vehicle side, and **in that** the hydrostatic tiller pump (15), the hydrostatic fan pump (16), the hydrostatic work pump (17) and the hydrostatic brake pump (18) are driven coaxially by a drive shaft of the electric motor (8).

2. The snow groomer according to claim 1, **characterized in that** a rechargeable battery system (9, 9a) is provided for supplying energy to the at least one electric motor (8, 8a, 11).

3. The snow groomer according to claim 2, **characterized in that** the electric motor (8, 8a) for the work hydraulics system is designed as a synchronous motor and is supplied - in operation - with a battery voltage of 400 V or 100 V.

4. The snow groomer according to claim 1 or 2, **characterized in that** the electric motors (11) of the drive system are designed as synchronous motors and are supplied - in operation - with a battery voltage of 400 V or 100 V.

5. The snow groomer according to any of the preceding claims, **characterized in that** a charger (10, 21), in particular with a charging plug (22), is provided on the vehicle side.

6. The snow groomer according to claim 5, **characterized in that** the charger (10) is provided with a voltage converter.

7. The snow groomer according to claim 5 or 6, **characterized in that** the charger (10, 21) and the charging plug (22) are attached in the region of a rear wall of a cab (5).

8. The snow groomer according to claim 2 or 3, **characterized in that** the battery system (9, 9a) is replaceably accommodated in a chassis frame (2) underneath the cab (5).

9. The snow groomer according to claim 2 or 3, **characterized in that** the battery system (9a) has several battery packs (B₁ to B₃) each connected by means of an electric plug connection (23) to one another and to the at least one electric motor (26) in rapidly changeable manner.

10. The snow groomer according to claim 9, **characterized in that** an electric circuit (SB) which couples the battery packs (B₁ to B₃) electrically to one another and to further electric or electronic component parts of the vehicle electrics and in particular of the electric motors (8a, 11, 26) is associated with the battery packs (B₁ to B₃).

## Revendications

1. Dameuse (1) avec un train de roulement à chenilles (3) qui est entraînable au moyen d'un système d'entraînement, sachant que le système d'entraînement présente deux moteurs électriques (11) qui sont associés respectivement à un barbotin (4) d'un côté du train de roulement à chenilles (3), caractérisé en qu'est prévu un système hydraulique de travail qui présente au moins un entraînement rotatif hydrostatique associé à une fonction de travail de la dameuse, sachant que le système hydraulique de travail présente un moteur de fraisage (14) conçu comme entraînement rotatif hydrostatique pour un arbre de fraisage d'une fraiseuse arrière (7) et une pompe de freinage (18) hydrostatique, une pompe de travail (17) hydrostatique et une pompe de ventilateur (16) hydrostatique, sachant qu'est associée au moteur de fraisage (14) une pompe de fraisage hydrostatique (15) qui applique une pression hydraulique pour le moteur de fraisage (14), sachant que la pompe de travail (17) sert à établir une pression hydrostatique pour des actionneurs linéaires destinés à régler la lame de dégagement et/ou pour des actionneurs linéaires destinés à régler un support d'outil arrière, sachant que la pompe de ventilateur (16) sert à générer une pression hydrostatique pour l'exploitation d'un entraînement rotatif hydrostatique pour une turbine de ventilateur destinée à ventiler et refroidir des unités fonctionnelles électriques de la dameuse (1), et que le système hydraulique de travail est entraîné par au moins un moteur électrique (8, 8a) qui est alimenté par une source d'énergie montée côté véhicule, et que la pompe de fraisage (15) hydrostatique, la pompe de ventilateur (16) hydrostatique, la pompe de travail (17) hydrostatique et la pompe de freinage (18) hydrostatique sont entraînées coaxialement par un arbre d'entraînement du moteur électrique (8).

2. Dameuse selon la revendication 1, **caractérisée en ce qu'**un système de batteries (9, 9a) rechargeable est prévu pour l'alimentation électrique dudit au moins un moteur électrique (8, 8a, 11).

3. Dameuse selon la revendication 2, **caractérisée en ce que** le moteur électrique (8, 8a) pour le système hydraulique de travail est conçu comme moteur synchrone et est alimenté - en service - sous une tension de batterie de 400 V ou 100 V.

4. Dameuse selon la revendication 1 ou 2, **caractérisée en ce que** les moteurs électriques (11) du système d'entraînement sont conçus comme moteurs synchrones et sont alimentés - en service - sous une tension de batterie de 400 V ou 100 V.

5. Dameuse selon l'une des revendications précédentes, **caractérisée en ce qu'**un dispositif de recharge (10, 21), notamment avec une fiche de recharge (22), est prévu côté véhicule.

6. Dameuse selon la revendication 5, **caractérisée en ce que** le dispositif de recharge (10) est prévu avec un transformateur de tension.

7. Dameuse selon la revendication 5 ou 6, **caractérisée en ce que** le dispositif de recharge (10, 21) et la fiche de recharge (22) sont installés au niveau d'une paroi arrière d'un poste de conduite (5).

8. Dameuse selon la revendication 2 ou 3, **caractérisée en ce que** le système de batteries (9, 9a) est logé dans un cadre de train de roulement (2) sous le poste de conduite (5), de manière à être remplaçable.

9. Dameuse selon la revendication 2 ou 3, **caractérisée en ce que** le système de batteries (9a) présente plusieurs blocs de batteries (B₁ à B₃) qui sont reliés entre eux respectivement au moyen d'une liaison enfichable (23) électrique de manière à être vite remplacés et sont reliés audit au moins un moteur électrique (26).

10. Dameuse selon la revendication 9, **caractérisée en ce qu'**est associé aux blocs de batteries (B₁ à B₃) un circuit électrique (SB) qui couple électriquement les blocs de batteries (B₁ à B₃) entre eux ainsi qu'à d'autres composants électriques ou électroniques du système électrique du véhicule et notamment aux moteurs électriques (8a, 11, 26).
